Europäisches Patentamt

European Patent Office

Office européen des brevets

(11) Publication number: **0 393 894**
**A1**

# EUROPEAN PATENT APPLICATION

(21) Application number: **90303749.7**

(22) Date of filing: **09.04.90**

(51) Int. Cl.⁵: **B23C 3/35, B21D 53/42**

(30) Priority: **17.04.89 GB 8908620**

(43) Date of publication of application:
**24.10.90 Bulletin 90/43**

(84) Designated Contracting States:
**DE ES FR IT**

(71) Applicant: **CAMLOC (U.K.) LIMITED**
**15 New Star Road, Troon Industrial Area**
**Leicester LE4 7JD(GB)**

(72) Inventor: **Lee, Miko**
**P.O. Box 342, Shin Juang**
**Taipei Hsien(TW)**

(74) Representative: **Goodenough, Nigel et al**
**A.A. Thornton & Co. Northumberland House**
**303-306 High Holborn**
**London WC1V 7LE(GB)**

(54) **Key manufacturing machine.**

(57) A key cutting machine comprises a drilling head (9) for drilling away portions of a key held on a mounting device (3). The mounting device (3) is part of a rotating assembly (6) which is successively indexed to present circumferentially spaced apart portions of the key blank to the drilling device (9). Each index position has associated therewith a control block assembly (61)which, in cooperation with a sensor (92) defines the cutting depth at that index position. Each control block assembly (61) includes means defining a plurality of different cutting depths, each cutting depth having associated therewith indicia whereby the cutting depth of each control block assembly may be selected at will.

FIG. 1

EP 0 393 894 A1

## KEY MANUFACTURING MACHINE

This invention relates to a key manufacturing machine. The preferred key manufacturing machine of the present invention utilizes a conventional drilling device which is adapted to facilitate drilling operation thereof.

According to the present invention there is provided a key manufacturing machine comprising a cutting device for removing material from a key blank; means for mounting the key blank for movement towards and away from the cutting device; rotational indexing means for rotationally indexing the blank to present successive areas of the blank to the cutting device; and movement limiting means associated with each index position for limiting movement of the cutting device towards the key blank in that index position.

The invention will be better understood from the following description of a preferred embodiment thereof, given by way of example only, reference being had to the accompanying drawings, wherein:

Figure 1 is a perspective view of a key manufacturing machine in accordance with the present invention;

Figure 2 is a front view of the key manufacturing machine of Figure 1, with the drilling device and mounting frame partially cut away to show the elements inside;

Figure 3 is a side cross-sectional view of the key manufacturing machine of Figure 1, showing the positioning block in a lower position;

Figure 4 is the same view as in Figure 3, but with the positioning block being shown in an elevated position;

Figure 5 is a top plan view of the positioning block for supporting and positioning the key;

Figure 6 is an exploded view of a control block assembly for use in an embodiment of the present invention; and

Figure 7 is a top plan view of the rotating means with a portion being partially broken away for clearly showing the attaching block assembly.

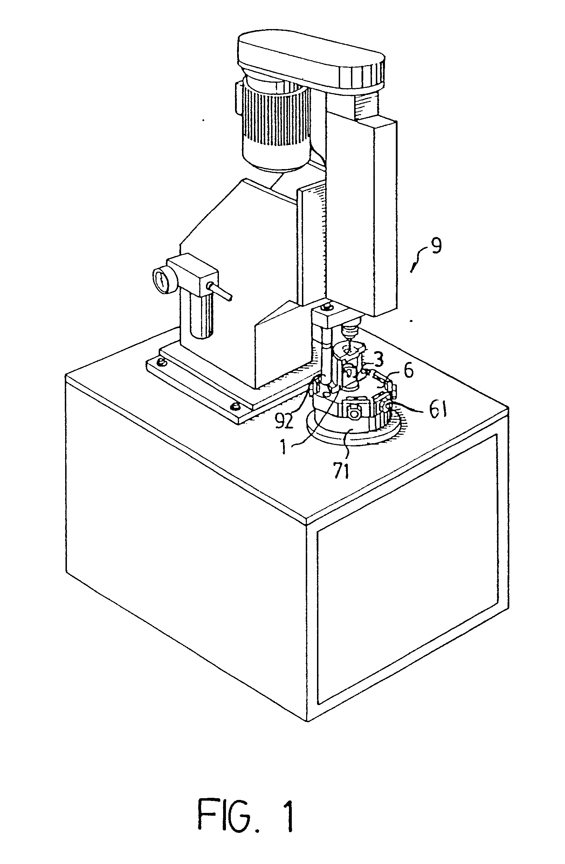

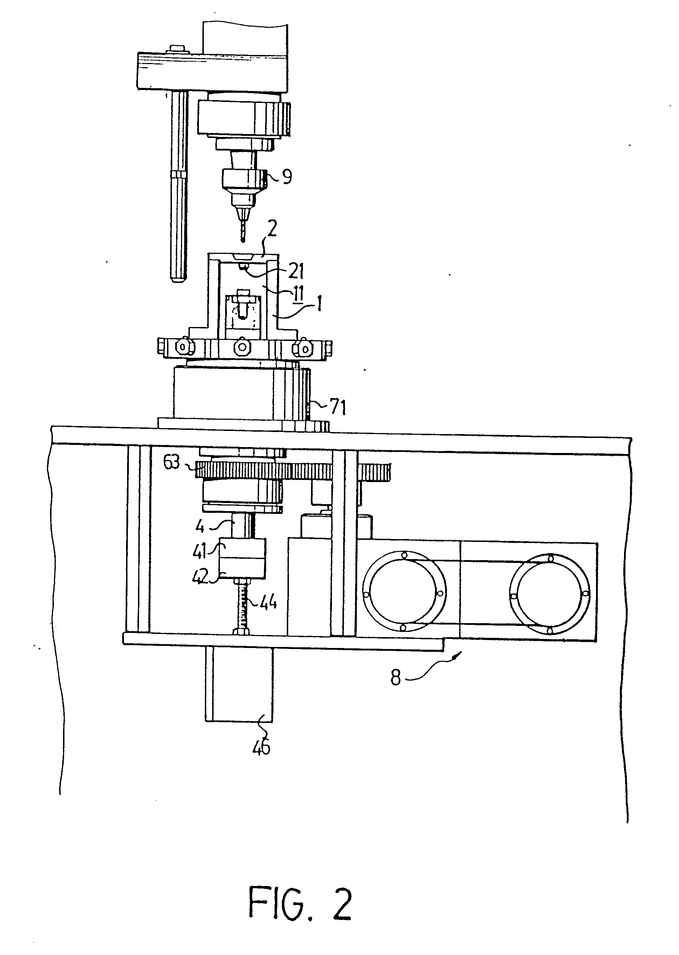

As shown in Figures 1 and 2, a key manufacturing machine comprises a drilling device 9; a rotating assembly 6 having a plurality of control block assemblies 61 circumferentially spaced at a top portion thereof, a base 1, a mounting means 4, a positioning block 3, and a transmission 8. The control block assemblies 61 are sensed by a sensing device 92 for controlling the drilling depth of a key 10 during the drilling operation. The structures of the block assembly 61 will be further described later.

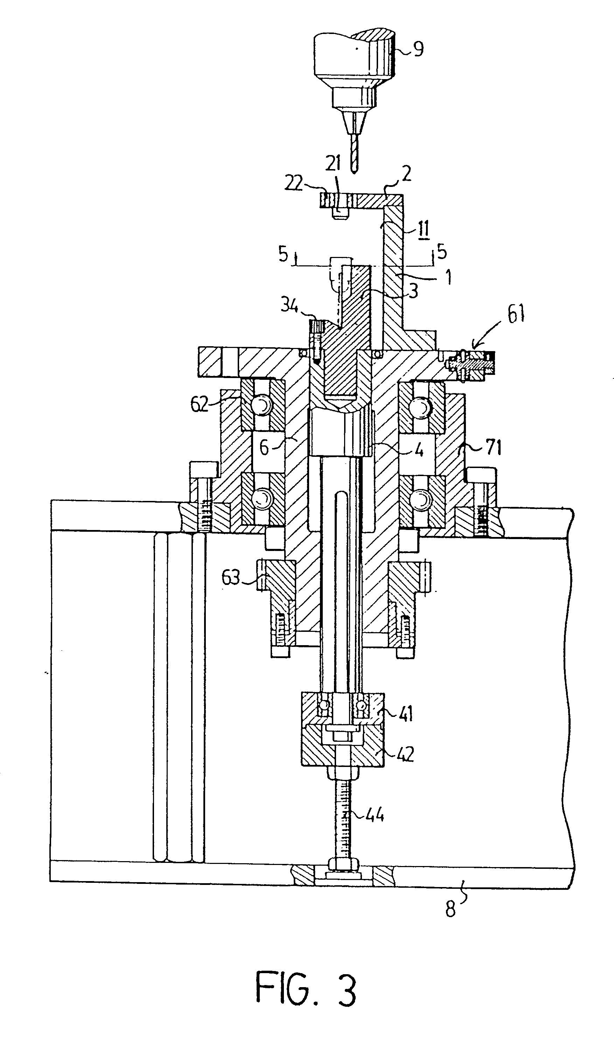

Referring to Figures 2 and 3, the rotating assembly 6 has a centre-bore portion which receives the mounting means 4 therewithin. A transmission gear 63 connected at a lower portion of the rotating assembly 6 is engaged with the transmission 8. The rotating assembly 6 is rotatable relative to a stationary bottom block 71 which is further bolted to a frame 7. A pair of bearings 62 are disposed between the rotating assembly 6 and the stationary bottom block 71 to provide firm support.

The base 1 is fixedly disposed on the top portion of the rotating assembly 6 and is semi-cylindrically shaped to form a cavity 11. A guide plate 2 is attached to a top end of the base 1 and has a pin 21 protruding downward and a plurality of longitudinal through-holes 22 circumferentially disposed thereon relative to the pin 21. The pin 21 is used for positioning the key 10 to be machined and the through-holes 22 are provided to allow the drill of the drilling device 9 to pass therethrough.

The mounting means 4 is received within the centre-bore portion of the rotating assembly 6 to allow longitudinal movement relative to the rotating assembly 6 and to prevent relative rotation therebetween by providing a keyway or the like thereon. A pair of adjusting blocks 41,42 are connected between a bottom end of the mounting means 4 and a guide screw 44 driven by a gas cylinder 46 to set the height of a positioning block 3. The positioning block 3 is rotatably secured on a top end of the mounting means 4 by a screw 34. An arc slot 33 is provided in the positioning block 3 to facilitate the rotation of the positioning block 3 relative to the mounting means 4.

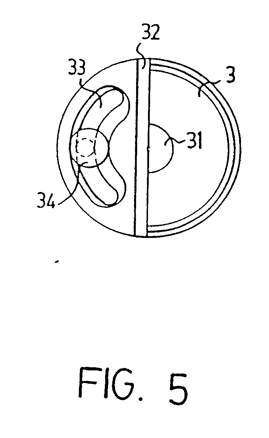

The positioning block has a centre-bored portion to form a bearing surface 31 for supporting a key 10 to be cut and a traverse groove 32 for positioning the key 10, as clearly shown in Figure 5. The transmission 8 is provided to engage with the transmission gear 63 on the rotating means 6 for facilitating a semi-automatic machining operation.

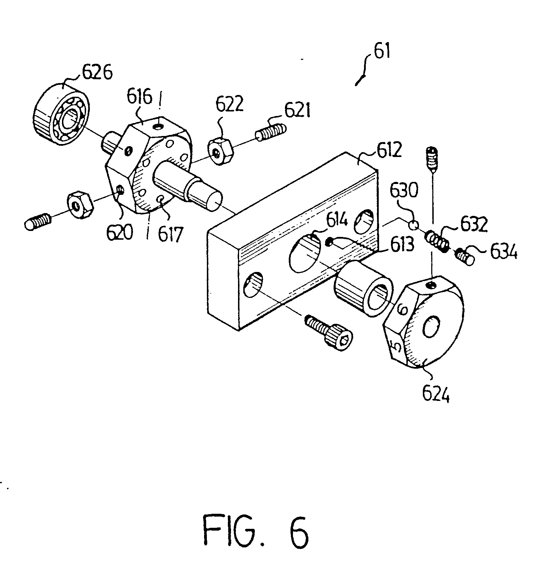

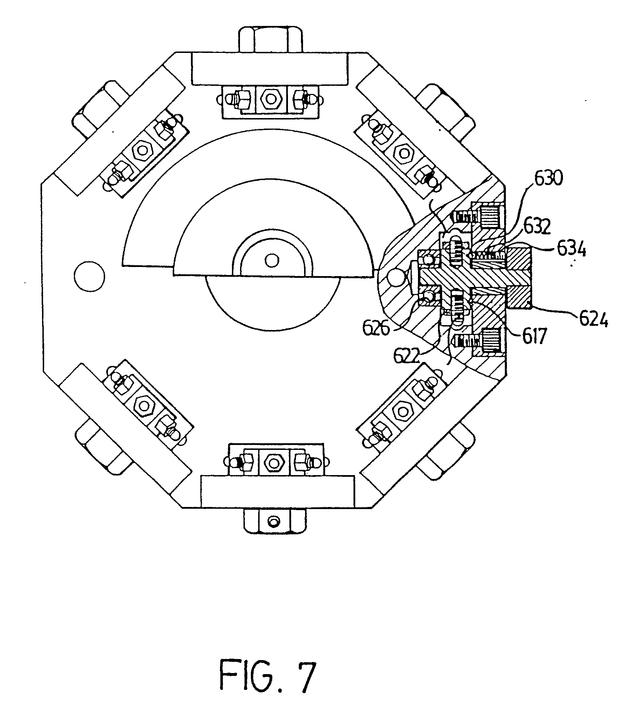

Referring now to Figures 6 and 7, the plurality of control block assemblies 61 are respectively disposed within a corresponding number of recesses circumferentially spaced at the top portion of the rotating assembly 6. The control block assemblies 61 each comprises a securing block 612 and a setting wheel 616. Each securing block 612 has a central hole 614 and is fixedly secured to the rotating assembly 6. Each setting wheel comprises an integral wheel part 616 and a shaft part 618. The wheel part 616 is a regular polygon with each side face thereof having a threaded hole 620 for receiving a set screw 621 and a lock nut 622. The set screws 621 are sensed by the sensing device 92 for controlling the drilling depth of the key 10 during the drilling operation. The shaft part 618 is connected to a control wheel 624 at one end thereof and is received within a bearing 626 at another end thereof.

A number of recesses 617 corresponding to the number of screws 621 are provided on an outward face of the wheel part 616, with each recess 617 adjacent to the side face.

A combination of a steel ball 630, a spring 632 and a set screw 634 is received within a threaded hole 613, which is adjacent the central hole 614 of the securing block 612. The steel ball 630 will engage with each of the recesses 617 thereby controlling the rotational movement of the wheel part 616.

Each set screw 621 is received within a respective threaded hole 620 of the wheel part 616. When all set screws 621 are screwed to a particular depth on the wheel part 616 of respective control block assembly 61, each control block assembly 61 can be set to a desired position by turning the control wheel 624, and the sensing device 92 can then be utilized to sense the particular depth which is required during each stage of the machining operation. Therefore, the set screws 621 are respectively adjustable on the wheel part 616 to pre-set respective drilling depths thereof.

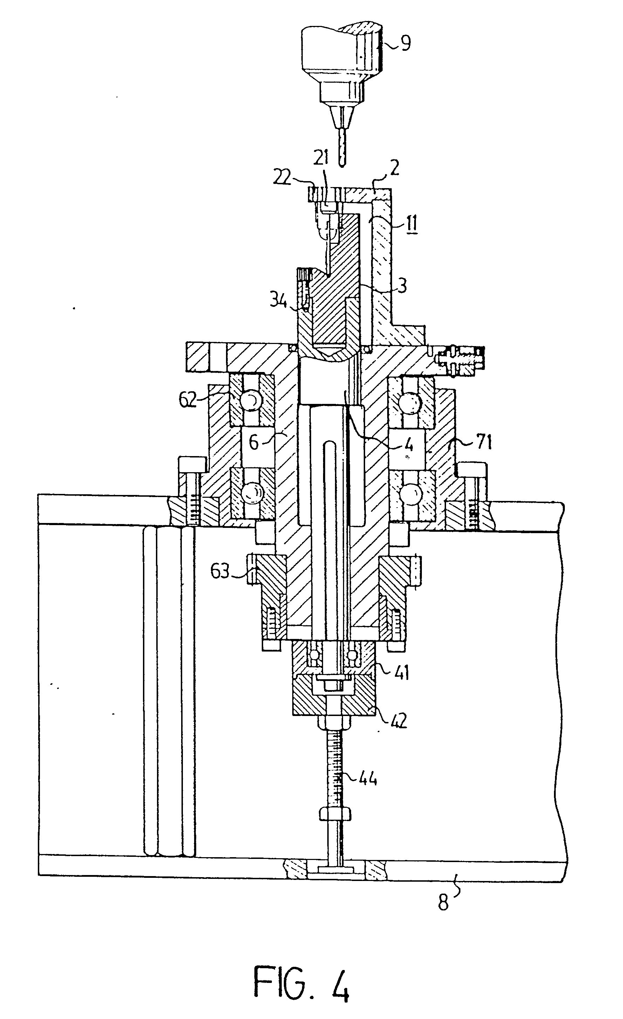

In order to cut a key a key blank is mounted on the positioning block 3 with the manually graspable portion of the key located in the groove 32 and the body of the key resting against the bearing surface 31 as illustrated in broken lines in Figure 3. The gas cylinder 46 is then actuated to raise the mounting means 4 and with it the positioning block 3 so that the end face of the key blank is pressed against the underside of the plate 2 and the pin 21 enters the centre bore of the key blank. With the air cylinder in the extended position the key blank will be held firmly in position, as illustrated in Figure 4.

Either before or after mounting the key blank as described above, the control block assemblies 61 are adjusted to produce the desired depth of cut of each slot to be formed in the key blank during cutting. To this end, the control wheel 624 of each control block assembly is rotated to position a desired one of the set screws 621 in the vertically upwardly facing direction. Preferably, indicia are provided about the periphery of the wheel 624 in order to identify which set screw 621 is in the upwardly extending direction at any one moment.

Once all the control block assemblies 61 have been set to the desired combination the drilling machine 9 is started and the drilling head is lowered to cause the drill bit to pass through the through hole 22 located immediately beneath the drill bit. Continued downward movement of the drilling head causes the drill to drill away a portion of the periphery of the key blank to produce an axially extending slot. Downward movement of the drill head continues until the sensing device 92 contacts the upwardly extending set screw 621 of the attaching block assembly 61 located immediately below the sensing device 92. When the sensing device 92 has contacted the set screw 621 the drilling head is raised and, when the drill has cleared the plate 2 the transmission 8 is actuated to rotate the rotating assembly 6 and with it the mounting means 4, positioning block 3 and base 1. Rotation continues until the assembly has indexed to position the next through hole 22 beneath the drill and the next control block assembly beneath the sensing device 92. The next slot is then drilled in the key blank as described above, to a depth determined by the block assembly located beneath the sensing device 92.

The advance and retraction of the drilling head and the rotation of the rotating assembly, etc. may be effected under automatic or semi-automatic control, or may be controlled manually.

If desired, the angular relationship between the slots drilled in the blank during cutting and some fixed point on the blank - for example some fixed protrusion or groove, may be adjusted by slackening the screw 34 and rotating the positioning block 3 relative to the mounting means 4, and then re-tightening the screw 34. In this way, a number of different series of keys may be produced, the angular position of the slots of each series relative to some fixed point on the key being different from each other.

While the present invention has been explained in relation to its preferred embodiment, it is to be understood that various modifications thereof will be apparent to those skilled in the art upon reading this specification. Therefore, it is to be understood that the invention disclosed herein is intended to cover all such modifications as fall within the scope of the appended claims.

## Claims

1. A key manufacturing machine comprising a cutting device for removing material from a key blank; means for mounting the key blank for movement towards and away from the cutting device; rotational indexing means for rotationally indexing the blank to present successive areas of the blank to the cutting device; and movement limiting means associated with each index position for limiting movement of the cutting device towards the key blank in that index position.

2. A key manufacturing machine according to claim 1 wherein the mounting means includes a guide plate having a plurality of through holes therein, each through hole corresponding to one index position of the mounting means and being adapted to support and guide the cutting device during cutting of the key in the corresponding index position.

3. A key manufacturing machine according to claim 1 or claim 2 wherein the cutting device is a drilling device including a drilling head mounted for rotation about an axis which is fixed relative to the machine frame of the key manufacturing machine.

4. A key manufacturing machine according to any preceding claim wherein the movement limiting means comprises a respective control block assembly associated with each index position, each control block assembly being adapted to define a cutting depth and being positioned, during the cutting at each index position, to be contacted by a cutting depth sensor whereby the cutting depth at each index position is limited to the depth defined by the corresponding control block assembly.

5. A key manufacturing machine according to claim 4 wherein each control block assembly comprises means defining a plurality of cutting depths, any particular cutting depth being selectable by indexing the cutting depth defining means to present any selected cutting depth defining means to the cutting depth sensor.

6. A key manufacturing machine according to claim 5 wherein each control block assembly comprises a rotatably mounted member having a plurality of threaded bores each receiving a lockable screw to define a respective cutting depth by the radial distance from the axis of rotation of the rotatably mounted member to the distal end of the lockable screw.

7. A key manufacturing machine according to claim 5 or claim 6 wherein indicia are associated with each cutting depth defining means of each control block assembly whereby the respective control block assemblies may be preset to a desired combination of cutting depths by setting each control block assembly as a respective indicia.

8. A key manufacturing machine according to any preceding claim wherein the mounting means includes a key holder for holding a key to be cut, and the key holder is rotationally adjustable relative to the base of the mounting means whereby the angular position of the cut portions of the key relative to a fixed point on the key may be adjusted.

9. A key cutting machine substantially as hereinbefore described with reference to the accompanying drawing.

FIG. 1

FIG. 2

FIG. 3

FIG. 4

FIG. 5

FIG. 6

FIG. 7

| | DOCUMENTS CONSIDERED TO BE RELEVANT | | EP 90303749.7 |
|---|---|---|---|

| Category | Citation of document with indication, where appropriate, of relevant passages | Relevant to claim | CLASSIFICATION OF THE APPLICATION (Int Cl⁵) |
|---|---|---|---|
| Y | US - A - 4 324 513 (HUGHES) <br> * Claim 1; fig. 1-4 * | 1,3 | B 23 C 3/35 <br> B 21 D 53/42 |
| Y | US - A - 4 088 060 (JOHNS) <br> * Column 3, last paragraph; fig. 1,6 * | 1,3 | |
| A | US - A - 4 687 389 (SANTII et al.) <br> * Column 4, lines 27-31; fig. 3 * | 2,8 | |
| A | US - A - 4 671 711 (STEINBACH et al.) <br> * Claims 5,15; fig. 13-15 * | 4,5,6, 7 | |

TECHNICAL FIELDS SEARCHED (Int Cl⁵)

B 21 D 53/00
B 23 C 3/00

The present search report has been drawn up for all claims

| Place of search | Date of completion of the search | Examiner |
|---|---|---|
| VIENNA | 22-06-1990 | BISTRICH |